(19) **Europäisches Patentamt**

**European Patent Office**

**Office européen des brevets**

(11) **EP 0 976 216 B1**

(12) **EUROPÄISCHE PATENTSCHRIFT**

(45) Veröffentlichungstag und Bekanntmachung des Hinweises auf die Patenterteilung:
**27.11.2002   Patentblatt 2002/48**

(21) Anmeldenummer: **98906843.2**

(22) Anmeldetag: **23.01.1998**

(51) Int Cl.⁷: **H04L 1/20**

(86) Internationale Anmeldenummer:
**PCT/DE98/00221**

(87) Internationale Veröffentlichungsnummer:
**WO 98/038764 (03.09.1998 Gazette 1998/35)**

(54) **VERFAHREN UND ANORDNUNG ZUR RAHMENFEHLERDETEKTION ZWECKS FEHLERVERDECKUNG INSBESONDERE BEI GSM ÜBERTRAGUNGEN**

FRAME-ERROR DETECTION METHOD AND DEVICE FOR ERROR MASKING, SPECIALLY IN GSM TRANSMISSIONS

PROCEDE ET DISPOSITIF DE DETECTION D'ERREURS DE TRAME POUR MASQUAGE D'ERREURS, NOTAMMENT DANS LE CAS DE TRANSMISSIONS GSM

(84) Benannte Vertragsstaaten:
**DE FR GB**

(30) Priorität: **27.02.1997   DE 19708022**

(43) Veröffentlichungstag der Anmeldung:
**02.02.2000   Patentblatt 2000/05**

(73) Patentinhaber: **SIEMENS AKTIENGESELLSCHAFT
80333 München (DE)**

(72) Erfinder:
* **HINDELANG, Thomas
  D-87640 Biessenhofen (DE)**
* **ERBEN, Christian
  D-85386 Eching (DE)**
* **XU, Wen
  D-85221 Dachau (DE)**

(56) Entgegenhaltungen:
WO-A-95/30282          WO-A-96/09704
US-A- 5 224 167        US-A- 5 255 343
US-A- 5 497 383

**Beschreibung**

Die Erfindung bezieht sich auf ein Verfahren zur Rahmenfehlerdetektion im Rahmen einer Datenübertragung, sowie auf eine Anordnung zur Durchführung des Verfahrens.

Um die beschränkte Kapazität eines zur Verfügung stehenden Übertragungskanals möglichst gut zu nützen, werden vor einer Datenübertragung in der Sendeeinrichtung insbesondere bei Bild-, Audio- und Sprachübertragung eine Quellcodierung durchgeführt, um Redundanz aus diesen Daten zu entfernen und somit die zu übertragenden Daten zu komprimieren. Häufig werden dabei die zu übertragenden Daten zunächst in sogenannte Rahmen aufgeteilt. Diese Rahmen können Zeitschlitze von einer bestimmten Dauer, aber auch spektrale Bereiche oder Bildausschnitte sein. Dann werden bei der Quellcodierung Parameter ermittelt, welche die zu übertragenden Daten möglichst gut beschreiben bzw. bestimmen. In diesem Fall spricht man von parametrischer Quellcodierung. Ein Beispiel hierfür ist im Fall der Sprachcodierung die GSM-Fullrate-Codierung. Bei der Sprachquellcodierung (Sprachcodierung) werden die ermittelten Parameter auch Sprachkoeffizienten genannt.

Bei der Übertragung dieser komprimierten Daten können bei schlechten Kanalbedingungen trotz Schutzmaßnahmen, wie Kanalcodierung, Fehler auftreten, so daß z.B. die empfangene Sprache stark gestört ist und ihre Verständlichkeit sogar verlorengeht. Daher werden z.B. beim GSM-Standard alle empfangenen Sprachrahmen zunächst mit Hilfe eines Rahmenfehlerdetektionskriteriums als gut oder schlecht klassifiziert. Die schlechten Rahmen werden anschließend durch einen Rahmen, der sich üblicherweise aus einem oder mehreren vorigen empfangenen "guten" Rahmen durch Extrapolation ergibt, ersetzt. Damit können die Störungen in der Sprache reduziert werden und die Sprachverständlichkeit bleibt erhalten.

Beispielsweise wird bei der GSM-Fullrate-Übertragung die Sprache in Rahmen von je 20 ms unterteilt und jeder Rahmen durch den Fullrate- bzw. Enhanced-Fullrate-Coder in 260 Bits komprimiert. Diese werden je nach Wichtigkeit als Klasse la, Klasse 1b und Klasse 2 Bits geordnet. Die 50 Bits der Klasse 1a werden unter anderem über einen Parity-Check mit 3 Bits gesichert. Liefert dieser CRC (Cyclic Redundancy Check) einen Fehler, so wird der Rahmen für schlecht erklärt. Der 3-Bit Parity-Check beim Fullrate-Sprachcoder hat eine Sicherheit von ca. 7/8 für Fehlerdetektion, d.h. es werden sowohl gute Rahmen als schlecht detektiert als auch umgekehrt. Man hört die schlechten Rahmen, die als gut detektiert werden oft mit einem deutlichen "Knacken" im Lautsprecher des mobilen Telefons.

Aus WO96/09704 ist ein Verfahren zur Erkennung fehlerhafter Sprachrahmen bekannt, wobei die Erkennung in Abhängigkeit von der Übertragungsqualität erfolgt.

Aus WO95/30282 ist es bekannt, fehlerhafte Audio-Rahmen anhand von Bitfehlern in einer kanalcodierten Bitfolge zu detektieren.

US-A-5 224 167 offenbart eine Vorrichtung zur Sprachcodierung mit einer Bewertungseinheit zur Bewertung vonreproduzierten Sprachsignalen.

Der Erfindung liegt daher die Aufgabe zugrunde, ein Verfahren zur Rahmenfehlerdetektion und eine Anordnung zur Durchführung dieses Verfahrens anzugeben, mit denen die Rahmenfehler zuverlässiger detektiert werden können. Dabei ist das Ziel, die Rahmen, die eine gute Qualität besitzen, als gut zu detektieren, und die schlechten als schlecht.

Diese Aufgabe wird durch ein Verfahren mit Merkmalen nach Anspruch 1 gelöst. Dabei werden Rahmen für falsch erklärt, wenn eine bestimmte logische Kombination von mehreren unterschiedlichen Kriterien erfüllt ist. Dabei besteht mindestens ein Kriterium darin, einen sogenannten Vergleichswert, der in der Empfangsvorrichtung ermittelt wird mit einem vorgegebenen Schwellwert zu vergleichen. Wird der Schwellwert über bzw. unterschritten, so qilt das Kriterium als erfüllt. Zumindest einer der in der Vergleichsvorrichtung zu ermittelnden Vergleichswerte hängt dabei von der Energie eines Sprachsignals eines Sprachrahmens und/oder deren Änderung gegenüber der entsprechenden Energie eines Sprachsignals eines vorhergehenden Sprachrahmens ab. Die Energie des Sprachsignals (Rahmenenergie) kann dabei auch geschätzt werden. Diese Schätzung kann, insbesondere wenn innerhalb der Datenübertragung in der Sendeeinrichtung eine parametrische Quellcodierung durchgeführt wird, mit Hilfe der dadurch ermittelten Parameter erfolgen. So ist es möglich, einen geschätzten Wert für die Rahmenenergie zu erhalten, ohne eine Quellendecodierung durchführen zu müssen. Dadurch zeichnet sich das Verfahren durch seine geringe Komplexität aus.

Bei einer bevorzugten Ausführungsvariante der Erfindung wird dieser Vergleichswert durch eine mathematische Funktion berechnet, deren Argumente Meßwerte oder innerhalb der digitalen Verarbeitung auftretende Werte sein können.

In einer weiteren Ausgestaltung der Erfindung, bei der innerhalb der Datenübertragung in der Sendeeinrichtung eine parametrische Quellcodierung durchgeführt wird, wird zumindest einer der dabei ermittelten Parameter oder dessen Änderung gegenüber dem entsprechenden Parameter eines vorhergehenden Rahmens dazu verwendet, zumindest einen der obengenannten Vergleichswerte zu berechnen.

Eine weitere bevorzugte Ausführungsvariante sieht vor, daß zumindest einer dieser Vergleichswerte unter anderem auf dem Cyclic Redundancy Check (CRC) basiert.

Durch Einbringen der Erfindung in das GSM-Systemkonzept kann, unabhängig vom verwendeten Sprachcoder (Fullrate-, Halfrateoder Enhanced Fullrate-Coder) eine wesentliche Verbesserung der Sprachqualität erreicht werden.

Weiterbildungen der Erfindung ergeben sich aus den Unteransprüchen. Anordnungen zur Durchführung des Verfahrens sind in den Ansprüchen 11 bis 15 angegeben.

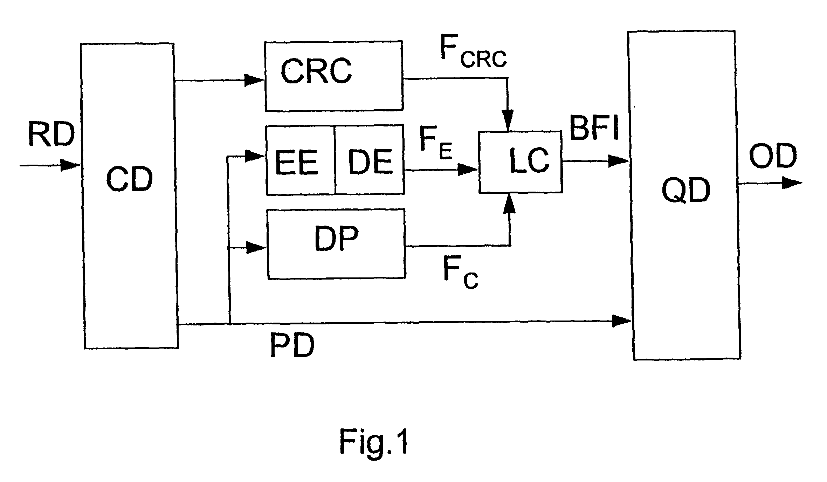

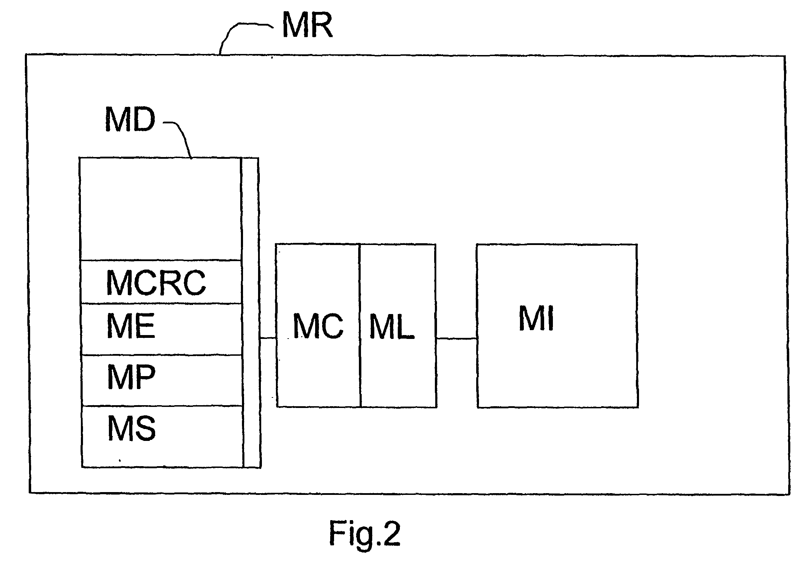

Zur Erläuterung von Ausführungsformen der Erfindung dient Figur 1, das ein Blockdiagramm einer bevorzugten Ausführungsform des erfindungsgemäßen Verfahrens zur Rahmenfehlerdetektion zeigt. Figur 2 zeigt den schematischen Aufbau einer Ausführungsform einer erfindungsgemäßen Vorrichtung.

Die Erfindung wird im folgenden anhand bevorzugter Ausführungsbeispiele und mit Hilfe der Figuren 1 und 2 näher beschrieben.

Die empfangenen Daten (RD) durchlaufen zunächst vorzugsweise einen Kanaldecoder (CD). Danach wird ein Cyclic Redundancy Check (CRC) durchgeführt und je nach Ergebnis dieser Überprüfung ein Vergleichswert $F_{CRC}$ bestimmt. Außerdem wird aus den Parametern (PD), die in der Sendeeinrichtung durch ein parametrisches Quellcodierverfahren ermittelt wurden die Rahmenenergie geschätzt (EE) und die Änderung der Energie gegenüber der Energie vorhergehender Rahmen berechnet (DE) und daraus ein Vergleichswert $F_E$ bestimmt. Darüber hinaus wird die Änderung dieser Parameter (PD) gegenüber den entsprechenden Parametern vorhergehender Rahmen berechnet (DP) und daraus ein Vergleichswert $F_C$ bestimmt. Diese Vergleichswerte F werden mit Schwellwerten verglichen und diese Vergleichsoperationen logisch miteinander verknüpft (LC). Je nach Ergebnis dieser logischen Verknüpfung wird ein Rahmen für schlecht oder gut erklärt. Ein für schlecht erklärter Rahmen kann in vorteilhafter Weise durch das Setzen eines BFI-flags (Bad Frame Indication) markiert werden. Die schlechten Rahmen werden anschließend im Quelldecoder durch einen Rahmen, der sich üblicherweise aus einem oder mehreren vorigen empfangenen "guten" Rahmen durch Extrapolation ergibt, ersetzt. Damit können im Quelldecoder (QD) mit Hilfe der Parameter (PD) die ursprünglichen Daten weitgehend wieder hergestellt werden.

Bei einer speziellen Ausführungsform des erfindungsgemäßen Verfahrens wird innerhalb der Datenübertragung in der Sendeeinrichtung ein parametrisches Sprachcodierverfahren, wie die GSM-Fullrate-, Halfrate- oder Enhanced Fullrate-Codierung durchgeführt.

Die in der Empfangseinrichtung zu ermittelnden Vergleichswerte F beruhen dabei vorzugsweise auf folgenden im Empfangsgerät durchgeführten Berechnungen:

a) CRC ($F_{CRC}$);
b) Schätzung der Rahmenenergie, insbesondere des Absolutwertes der Rahmenenergie und deren Änderung zwischen zwei aufeinander folgenden Rahmen aus den Sprachkoeffizienten (Parameter der parametrischen Quellcodierung) ($F_E$) ;
c)Werte einzelner Sprachkoeffizienten (Parameter der parametrischen Quellcodierung) und deren Änderung zwischen nachfolgenden Rahmen ($F_C$ , $F_{CLAR}$ , $F_{CX}$ , $F_{CN}$).

In vorteilhafter Weise kann für Vergleichswerte, deren Werte im Bereich von 0 (gut) bis 100 (schlecht) definiert sind, eine Schwelle von z.B. 95 festgelegt werden. Wenn mindestens einer der ermittelten Vergleichswerte diese Schwelle oder die Addition von mehreren Vergleichswerten eine höhere Schwelle von z.B. 150 überschreitet, dann heißt der Rahmen schlecht, andernfalls gut. Falls ein Rahmen für schlecht erklärt wird, wird das BFI-flag (Bad Frame Indication) gesetzt.

$$BFI = \begin{cases} 1, & \text{für} & (F_{CRC} > 95 \cup F_E > 95 \cup F_{CLAR} > 95 \cup F_{CX} > 95 \cup \\ & & F_{CN} > 95 \cup F_{CRC} + F_E + F_C > 150) \\ 0, & \text{sonst} \end{cases} \qquad (0)$$

Bei der Verwendung des GSM-Fullrate-Sprachcoders können die einzelnen Vergleichswerte vorteilhaft folgendermaßen ermittelt werden.

A) CRC-Vergleichswert $F_{CRC}$

Die empfangenen decodierten Parity-Bits werden mit den Parity-Bits, die anhand der empfangenen decodierten 50 Klasse la Bits ermittelt werden, verglichen. Existiert keine Übereinstimmung dazwischen, wird der CRC-Vergleichswert $F_{CRC}$ auf beispielsweise einen Wert von $F_{CRC}$ = 100 (schlechter Rahmen), und sonst $F_{CRC}$ = 0 gesetzt.

B) Energievergleichswert $F_E = F_{E1} + F_{E2}$

• Energieabschätzung mit Hilfe der 76 Sprachkoeffizienten eines Rahmens

Die Energie eines Sprachrahmens von 20 ms ist vor der Sprachdecodierung nicht bekannt. Um nicht zweimal eine Sprachdecodierung durchführen zu müssen, kann die Rahmenenergie $E_{Ges}$ anhand der 76 Sprachkoeffizienten geschätzt werden. Vorzugsweise kann diese Energieschätzung folgendermaßen durchgeführt werden:
Zuerst wird eine sog. Energie $E_{rest}$ nach der folgenden Formel für den Teilrahmen $m$ von 5 ms bestimmt ($m$ = 0, 1, 2, 3)

$$E_{rest}(m) = \sum_{i=0}^{12}\left(\frac{x_m(i) - 3.5}{4}\right)^2 * {x'_{max}}^2 \qquad (1)$$

wobei $x'_{max}$ den delogarithmisierten Koeffizienten $x_{max}$ (Blockamplitude) und $x_m(i)$ die RPE-Pulse des Teilrahmens $m$ darstellen [1].
Im nächsten Schritt wird in einer groben Näherung die Energie $E_{Subfr}$ für den aktuellen Teilrahmen $m$ ermittelt. Dabei wird abhängig vom LTP-delay $N$ und dem Ähnlichkeitsmaß $q_b$ auf die Energie $E_{rest}$, die mit $q_b$ gewichtete Energie des drittletzten, vorletzten oder vorigen Teilrahmen addiert

$$E_{subfr}(m) = E_{rest}(m) + q_b \cdot E_{Subfr}(m-l) \qquad (2)$$

Folgende vorteilhafte Zuordnung fuer die Teilrahmen m-1 (1=1,2,3; ist m-1 < 0, entspricht dies dem Teilrahmen m-1+4 des vergangenen Gesamtrahmens, der zuletzt als "gut" bewertet wurde.) und die Gewichtung $q_b$ abhängig vom LTP-delay $N$ (9., 26., 43. und 60. Koeffizient, jeweils mit 7 Bit quantisiert) und dem Wert $b$ (10., 27., 44. und 61. Koeffizient, jeweils mit 2 Bit quantisiert) ist dabei denkbar [1]:

Tab. 1:

| Zuordnung des Koeffizienten $b$ zur Güte q | |
|---|---|
| $b$ | $q_b$ |
| 0 | 0.1 |
| 1 | 0.35 |
| 2 | 0.65 |
| 3 | 1.0 |

Tab. 2:

| Zuordnung des Koeffizienten $N$ zur Nummer des Teilrahmens. | |
|---|---|
| Delay $N$ | Teilrahmen ($m - 1$) |
| <= 60 | $m - 1$ |
| 61..100 | $m - 2$ |
| >=101 | $m - 3$ |

Die Energie $E_{Subfr}$ ist für alle 4 Teilrahmen von jeweils 5 ms bestimmt. Wird ein Fehler in den vorangegangenen Rahmen (BFI-Flag gesetzt) festgestellt, so wird auf den letzten guten Rahmen verwiesen, wobei die Energie pro fehlerhaftem Rahmen beispielsweise um 20% gedämpft wird.
Die Energie $E_{HP}$ vor der abschließenden Deemphase wird wie folgt berechnet:

$$E_{HP}(m) = E_{Subfr}(m) * \prod_{i=1}^{8} \frac{1}{1-r_m(i)^2} \qquad (3)$$

wobei $r_m(i)$ die aus den LAR-Koeffizienten berechneten Reflexionskoeffizienten sind [1]. Die Energien $E_{HP}$ für 4 Teilrahmen werden addiert und ergeben so die gesamte Energie eines Rahmens vor der Deemphase durch das Tiefpaßfilter. Diese Energie wird logarithmiert und anschließend vom Ergebnis der Wert 23 (willkürlich gewählt) subtrahiert. Ein Wert von 0 dB entspricht dann einem sehr leisen Hintergrundrauschen.

$$E_{Log} = 10 * log_{10}\left(\sum_{m=1}^{4} E_{HP}(m)\right) - 23 \quad [dB] \qquad (4)$$

Durch das Hochpaßfilter wird die Energie wenig geändert. Man erhält deshalb

$$E_{Ges} \approx E_{Log} \qquad (5)$$

• Bestimmung des Energievergleichswerts $F_E = F_{E1} + F_{E2}$

i) $F_{E1}$ : Messungen von vielen Sprachproben haben ergeben, daß die Energie eines Sprachsignals $E = E_m$ ($E_m$ = Energie $E_{ges}$ des aktuellen Rahmens) einen gewissen Wert von z.B. 57 dB nie und einen Wert von 48 dB selten überschreitet. Ein Realisierungsbeispiel für die Berechnung von $F_{E1}$ wird folgenderweise gegeben

$$F_{E1} = \begin{cases} 100 & (E > 57 \text{ dB}) \\ 10*(E-48) & (48 < E \leq 57 \text{ dB}) \\ 0 & (E \leq 48 \text{ dB}) \end{cases} \qquad (6)$$

ii) $F_{E2}$ : Die Änderung der Energie $\Delta E = |E_m - E_{m-1}|$ zwischen einem aktuellen und einem vorhergehenden Rahmen ist normalerweise kleiner als ein gewisser Grenzwert $\Delta E_{max}$. Diese Änderung ist jedoch von der absoluten Energie $E_m$ abhängig. Tritt eine größere Änderung auf, so handelt es sich höchstwahrscheinlich um einen Übertragungsfehler im Kanal. Ferner existieren auch Grenzwerte $\Delta E_{selten}$ für die Energieänderung, die sehr selten (z.B. weniger als 5%) auftreten. In der folgenden Tabelle ist eine mögliche Realisierung dieser zwei Grenzwerte angegeben, wobei die absolute Energie als $\min\{E_{m-1}, E_m\}$ in 5 dB Schritten beschrieben wird.

| $\min\{E_{m-1}, E_m\}$ | [dB] | <5 | <10 | <15 | <20 | <25 | <30 |
|---|---|---|---|---|---|---|---|
| $\Delta E_{max}$ | [dB] | 42 | 39 | 36 | 30 | 27 | 24 |
| $\Delta E_{selten}$ | [dB] | 22 | 19 | 18 | 17 | 15 | 14 |

| $\min\{E_{m-1}, E_m\}$ | [dB] | <35 | <40 | <45 | <50 | <55 | <57 | ab 57 |
|---|---|---|---|---|---|---|---|---|
| $\Delta E_{max}$ | [dB] | 20 | 16 | 12 | 9 | 6 | 3 | 0 |
| $\Delta E_{selten}$ | [dB] | 12 | 9 | 6 | 4 | 3 | 1 | --- |

Tab. 3: Maximal erlaubte Energieänderung und selten auftretende Energieänderung (ab diesem Wert wird ein Energievergleichswert berechnet, der ein Maß für die Fehlerwahrscheinlichkeit des aktuellen Sprachrahmens ist) in Abhängigkeit von der Absolutenergie des Sprachrahmens.

Eine denkbare Realisierungsvariante für die Berechnung von $F_{E2}$ ist im folgenden angegeben:

$$F_{E2} = \begin{cases} 100 & (\Delta E > \Delta E_{max}) \\ 100 * \dfrac{\Delta E - \Delta E_{selten}}{\Delta E_{max} - \Delta E_{selten}} & (\Delta E_{selten} < \Delta E \leq \Delta E_{max}) \\ 0 & (\Delta E \leq \Delta E_{selten}) \end{cases} \qquad (7)$$

Das Maximum für den Energievergleichswert $F_E$ wird vorzugsweise auf 100 beschränkt.

C) Koeffizientenvergleichswerte $F_C$, $F_{CLAR}$, $F_{CX}$, $F_{CN}$

Statistische Untersuchungen von Sprachrahmen haben ergeben, daß sich einige der 76 Sprachkoeffizienten, die beim GSM-Fullrate-Sprachcoder erzeugt werden, nur sehr wenig ändern, darunter die 8 LAR-Koeffizienten aus der LPC-Analyse und die 4 $X_{max}$-Koeffizienten aus der RPE-Analyse. Daher kann diese Korrelation der Koeffizienten für die Detektion von Rahmenfehlern verwendet werden. Ist die Änderung größer als ein bestimmter Wert, so ist dies mit einer großen Wahrscheinlichkeit auf einen Kanalfehler zurückzuführen. Eine Sonderstellung nehmen die 4 LTP-Delay-Koeffizienten ein, deren absoluter erlaubter Wertebereich begrenzt ist. Liegt ein empfangener Wert außerhalb dieses Bereichs, so kann dies für die Rahmenfehlerdetektion berücksichtigt werden.

- In vorteihafter Weise können die Koeffizientenvergleichswerte folgendermaßen bestimmt werden:

   i) $F_{CLAR}$: Wie bei der Energiebetrachtung wird ein Maximalwert, um den sich die Koeffizienten ändern, angegeben. Ist die Änderung noch größer, wird der Koeffizientenvergleichswert $F_{CLAR}$ auf 100 gesetzt. Ferner gibt es eine Änderung, die sehr selten (in weniger als 5% Fällen) auftritt. Zwischen diesen zwei Werten wird der Koeffizientenvergleichswert $F_{CLAR}$ linear von 0 auf 100 erhöht. In der folgenden Tabelle ist eine mögliche Zuordnung dieser Werte zu den 8 LAR-Koeffizienten angegeben:

Tab. 4:

| Koeffizient LAR | 1 | 2 | 3 | 4 | 5 | 6 | 7 | 8 |
|---|---|---|---|---|---|---|---|---|
| Wertebereich | 0-63 | 0-63 | 0-31 | 0-31 | 0-15 | 0-15 | 0-7 | 0-7 |
| $\Delta_{max}$ | 31 | 31 | 15 | 15 | 8 | 8 | -- | -- |
| $\Delta_{selten}$ | 24 | 24 | 12 | 12 | 6 | 6 | 4 | 4 |
| Wertebereich, maximal erlaubte Änderung und selten erreichte Änderung (ab diesem Wert wird ein Koeffizienten*vergleichswert* berechnet, der ein Maß für die Fehlerwahrscheinlichkeit des aktuellen Sprachrahmens ist) in Abhängigkeit von der Nummer des Sprachkoeffizienten. | | | | | | | | |

Da die LAR-Koeffizienten 7 und 8 für die Verständlichkeit der Sprache nicht so bedeutend sind, wird der Koeffizienten*vergleichswert* $F_{CLAR}$ auf 40 gesetzt, wenn die Änderung 5 - 7 beträgt, und auf 20, wenn sie 4 beträgt. Der Koeffizienten*vergleichswert* $F_{CLAR}$ wird jedoch keinesfalls auf 100 gesetzt, weshalb kein maximal erlaubtes $\Delta_{max}$ angegeben ist. Da eine große Änderung dennoch ein Hinweis auf einen Kanalfehler ist und diese meist gebündelt auftreten (Fading), werden die LAR-Koeffizienten 7 und 8 in einem bestimmten Maße berücksichtigt. Man erhält somit einen zusätzlichen Wert für das Koeffizientenkriterium, der eine sicherere Entscheidung eines Kanalfehlers ermöglicht. In der zweiten Zeile der Tabelle ist der Wertebereich, den die LAR-Koeffizienten die LAR-Koeffizienten annehmen können, angegeben.

ii) $F_{CX}$ : Der Koeffizient $x_{max}$ (Blockamplitude) wird pro Teilrahmen ermittelt, d.h. er liegt für jeden Rahmen von 20 ms viermal vor. Es wird einerseits die Summe der vier Änderungen von $x_{max}$ zwischen den einzelnen Teilrahmen berechnet. Ist dieser Wert größer als 64, wird der Koeffizientenvergleichswert $F_{CX}$ auf 100 gesetzt, für Werte zwischen 48 und 64 wird er linear von 0 bis 100 errechnet. Andererseits wird der Maximalwert der 4 Änderungen bestimmt. Ist er größer als 31, wird der Koeffizientenvergleichswert $F_{CX}$ auf 100 gesetzt und für Werte von 24 bis 31 linear von 0 bis 100 erhöht.

iii) $F_{CN}$ : Das LTP-delay $N$ wird mit 7 Bit quantisiert und hat somit einen Wertebereich von 0 bis 127. Aufgrund der Definition der LTP-Analyse ist jedoch nur ein Bereich zwischen 40 bis 120 erlaubt. Ein Wert von 0..39 oder 121..127 ist somit auf alle Fälle auf einen Kanalfehler zurückzuführen. Da ein solcher Wert fast immer ein Fehler in den Klasse la Bits darstellt (6 der 7 Bits dieses LTP-Koeffizienten sind Klasse la Bits, so daß nur eine Werteänderung von 120 zu 121 kein Fehler in den la Bits ist), weist ein solcher Wert so gut wie immer auf Fehler in den Klasse la Bits hin. Diese Fehler sind besonders störend. Deshalb läßt sich ein Koeffizientenvergleichswert $F_{CN}$ vorteilhaft und einfach wie folgt definieren

$$F_{CN} = \begin{cases} 100 & (N > 120 \ \cup \ N < 40) \\ 0 & \text{sonst} \end{cases} \qquad (8)$$

iv) $F_C$ : Die Werte $F_{CLAR}$ , $F_{CX}$ , $F_{CN}$ werden aufaddiert und ergeben den Koeffizientenvergleichswert $F_C$. Der maximale Wert für ihn wird daher vorzugsweise auf 140 beschränkt.

Dadurch, daß bei Änderungen immer ein aktueller Wert mit einem vergangenen Wert verglichen wird, besteht die Gefahr der Fehlerfortpflanzung immer dann, wenn ein fehlerhafter Parameter gespeichert wird und somit als Vergleichswert für den nächsten Rahmen verwendet wird. Folglich kann beim nächsten Mal ein Rahmenfehler detektiert werden, obwohl die empfangenen Bits alle richtig waren. Um die Möglichkeit der Fehlerfortpflanzung möglichst auszuschließen sollte der Vergleich eines falsch gespeicherten Wertes mit einem neuen Wert vorzugsweise vermieden werden. Dazu können vorzugsweise die alten Werte vor der Speicherung korrigiert werden. Eine mögliche Lösung für die Speicherung der alten Werte wird im folgenden beschrieben. Zuerst wird dabei auf die LAR-Koeffizienten 1 - 6 eingegangen. Ist die Änderung der zwei LAR-Werte größer als der in Tabelle 4 angegebene Maximalwert, so wird folgender Wert gespeichert

$$LAR_s[i] = \begin{cases} \left(2 * LAR_0[i] + LAR_0[i] - \Delta_{max}(i)\right)/3, & \text{wenn } LAR_{akt} \leq LAR_0 \\ \left(2 * LAR_0[i] + LAR_0[i] + \Delta_{max}(i)\right)/3, & \text{wenn } LAR_{akt} > LAR_0 \end{cases} \quad i \in \{1...6\} \quad (9)$$

wobei $LAR_s$ der neue zu speichernde Wert, $LAR_0$ der alte Wert und $LAR_{akt}$ der aktuelle empfangene Wert ist. Durch diese Berechnung wird die Möglichkeit, daß sich eine geringere Änderung in die entsprechende Richtung ergeben hatte, berücksichtigt. Liegt die Änderung zwischen den zwei in der Tabelle angegebenen Werten, so gilt

$$LAR_s[i] = \left(2 * LAR_0[i] + LAR_{akt}[i]\right)/3 \qquad i \in \{1...6\} \qquad (10)$$

wobei $LAR_{akt}$ der aktuelle Rahmenwert ist. Für die LAR-Koeffizienten 7 und 8 wird der Wert auf 3 gesetzt, wenn der alte gespeicherte Wert < 4 ist und die Änderung mindestens 4 betrug und auf 4, wenn der alte gespeicherte Wert >= 4 war. Folglich ist die Wahrscheinlichkeit, daß beim nächsten Rahmen $F_{CLAR}$ aufgrund der LAR-Koeffizienten 7 und 8 erhöht wird sehr gering. Eine Fehlerfortpflanzung aufgrund von unbedeutenderen Koeffizienten wäre besonders störend.

Für alle 8 LAR-Koeffizienten wird $LAR_s[i]=LAR_{aky}[i]$, wenn die Änderung kleiner als $\Delta_{selten}$ ist.

Bei den Koeffizienten $X_{max}$ wird die Änderung des Koeffizienten zwischen dem 3. und dem 4. Teilrahmen betrachtet. Ist diese höchstens 20, so wird der Wert des 4. Teilrahmens für den nächsten Durchlauf gespeichert, andernfalls wird der Mittelwert aus dem alten gespeicherten und den 4 aktuellen Werten gebildet.

Für den Fachmann ist es leicht möglich, die hier beschriebene Ausführungsform des erfindungsgemäßen Verfahrens zur Rahmenfehlerdetektion bei anderen, insbesondere parametrischen Quellcodierverfahren, wie Halfrate- oder Enhanced Fullrate-Codierung aber auch bei Audio- und Videoquellcodierung anzuwenden, indem Vergleichswerte für die Rahmenenergie und die Parameter angepaßt an die jeweils zu übertragende Datenart ermittelt werden.

Eine dem erfindungsgemäßen Verfahren entsprechende Anordnung, sieht einen digitalen Prozessor (MD, MC, ML, MI) vor, der mit einer Prozedur innerhalb eines Programms obengenannte Vergleichswerte ermittelt und diese Vergleichswerte mit Schwellwerten vergleicht. Außerdem verknüpft diese digitale Verarbeitungseinheit diese Vergleichsoperationen logisch miteinander und versieht Rahmen mit einer Markierung (BFI), wenn diese obengenannte logische Kombination erfüllt ist. Ferner berechnet dieser Prozessor aktuelle abzuspeichernde Werte, um die entsprechenden Vergleiche durchführen zu können.

Die digitale Signalverarbeitungseinheit (MCRC, ME, MP) einer bevorzugten Ausführungsform der erfindungsgemäßen Anordnung führt außerdem einen CRC durch und ermittelt Parameter, die innerhalb der Datenübertragung durch ein parametrisches Quellcodierverfahren berechnet werden und schätzt die Rahmenenergie mit Hilfe dieser Parameter.

Eine weitere erfindungsgemäße Anordnung verfügt außerdem über Speicher (MS), zur Abspeicherung eventuell korrigierter Parameter, die für spätere Berechnungen wieder benötigt werden, um die entsprechenden Vergleiche durchführen zu können.

Die genannten Mittel zum Aufbau der beschriebenen Anordnungen und Vorrichtungen realisiert der Fachmann beispielsweise mit Hilfe geeigneter Software-Module, die auf Prozessoren ablaufen, welche in Kommunikationsendgeräten der genannten Art üblicherweise vorhanden sind. Die Beschreibung des erfindungsgemäßen Verfahrens setzt den Fachmann in die Lage, derartige Software-Module ohne weiteres zu erstellen.

Im Rahmen dieser Anmeldung wurden folgende Dokumente zitiert:

[1] GSM Recommendations 06.10, Kapitel 3.

## Patentansprüche

1. Verfahren zur Rahmenfehlerdetektion bei dem ein Sprachrahmen für schlecht erklärt wird, wenn eine bestimmte logische Kombination von Kriterien erfüllt ist, wobei mindestens ein Kriterium aus einem Vergleich zwischen einem Schwellwert und einem in der Empfangsvorrichtung zu ermittelnden Vergleichswert besteht **dadurch gekennzeichnet,** **daß** zumindest einer der in der Empfangsvorrichtung zu ermittelnden Vergleichswerte von der eventuell geschätzten Energie eines Sprachsignals eines Sprachrahmens und/oder deren Änderung gegenüber der entsprechenden eventuell geschätzten Energie eines Sprachsignals eines vorhergehenden Sprachrahmens abhängt.

2. Verfahren nach Anspruch 1
**dadurch gekennzeichnet,**
**daß** mindestens einer der in der Empfangsvorrichtung zu ermittelnden Vergleichswerte durch eine mathematische Funktion berechnet wird, deren Argumente unter anderem aus anderen in der Empfangsvorrichtung zu ermittelnden Werten bestehen.

3. Verfahren nach einem der vorhergehenden Ansprüche,
**dadurch gekennzeichnet,**
**daß** zumindest einer der zu ermittelnden Vergleichswerte unter anderem von bestimmten, durch ein innerhalb der Datenübertragung durchgeführtes parametrisches Quellcodierverfahren ermittelten, Parametern und/oder deren Änderung gegenüber den entsprechenden Parametern eines vorhergehenden Rahmens abhängt.

4. Verfahren nach einem der vorhergehenden Ansprüche,
**dadurch gekennzeichnet,**
**daß** zumindest einer der zu ermittelnden Vergleichswerte unter anderem auf dem Cyclic Redundancy Check (CRC) basiert.

5. Verfahren nach einem der vorhergehenden Ansprüche,
**dadurch gekennzeichnet,**
**daß** zumindest einer der zu ermittelnden Vergleichswerte unter anderem durch eine lineare Kombination von Werten, die auf dem Cyclic Redundancy Check (CRC) basieren und/oder Werten, die von der eventuell geschätzten Rahmenenergie und/oder deren Änderung gegenüber der entsprechenden eventuell geschätzten Rahmenenergie eines vorhergehenden Rahmens und/oder Werten, die von bestimmten durch ein parametrisches Quellcodierverfahren ermittelten Parametern und/oder deren Änderung gegenüber den entsprechenden Parametern eines vorhergehenden Rahmens abhängen.

6. Verfahren nach einem der vorhergehenden Ansprüche bei dem innerhalb der Datenübertragung bei der Quellcodierung unter anderem ein Linear Predictive Coding (LPC) durchgeführt wird,
**dadurch gekennzeichnet,**
**daß** zumindest einer der zu ermittelnden Vergleichswerte unter anderem von der Änderung mindestens eines Linear Predictive Coding-Filter-Koeffizienten gegenüber dem entsprechenden Koeffizienten in einem vorhergehenden Rahmen abhängt.

7. Verfahren nach einem der vorhergehenden Ansprüche bei dem innerhalb der Datenübertragung bei der Quellcodierung unter anderem eine Long-Term-Prediction (LTP) durchgeführt wird,
**dadurch gekennzeichnet,**
**daß** zumindest einer der zu ermittelnden Vergleichswerte unter anderem von dem Wert des Long-Term-Prediction-delays abhängt.

8. Verfahren nach einem der vorhergehenden Ansprüche bei dem innerhalb der Datenübertragung bei der Quellcodierung unter anderem eine Regular-Pulse-Excitation-Analyse durchgeführt wird,
**dadurch gekennzeichnet,**
**daß** zumindest einer der zu ermittelnden Vergleichswerte unter anderem von mindestens einer Blockamplitude oder einem Restenergiewert eines Teilrahmens abhängt.

9. Verfahren nach einem der vorhergehenden Ansprüche
**dadurch gekennzeichnet,**
**daß** die Werte der für spätere Berechnungen zu speichernden Parameter in einer Weise korrigiert werden, die eine Fehlerfortpflanzung zumindest vermindert.

10. Empfangsvorrichtung (MR) zur Durchführung des Verfahrens nach Anspruch 1 mit

a) Mitteln (MD) zum Ermitteln von für den aktuellen Rahmen spezifischen Vergleichswerten;
b) Mitteln (MC) zum Vergleich zwischen den ermittelten Vergleichswerten und entsprechenden Schwellwerten;
c) Mitteln (ML) zur logischen Verknüpfung der unter b) durchgeführten Vergleichsoperationen;
d) Mitteln (MI) zur Kennzeichnung eines für schlecht erklärten Rahmens; und

**EP 0 976 216 B1**

e) Mitteln (ME) zur Berechnung oder Schätzung der Energie eines Sprachsignals eines Sprachrahmens.

**11.** Vorrichtung nach Anspruch 10 mit
Mitteln (MCRC) zur Cyclic Redundancy Check (CRC) Auswertung.

**12.** Vorrichtung nach einem der Ansprüche 10 bis 11 mit Mitteln (MP) zur Ermittlung von Parametern, die für die innerhalb eines Rahmens übertragenen Daten spezifisch sind.

**13.** Vorrichtung nach einem der Ansprüche 10 bis 12 mit Mitteln (MS) zur Speicherung von für spätere Berechnungen benötigten Parametern, die vor der Speicherung derart korrigiert werden, daß eine Fehlerfortpflanzug zumindest vermindert wird.

**Claims**

**1.** Frame error detection method in which a voice frame is classified as unsatisfactory if a specific logical combination of criteria is fulfilled, at least one criterion being composed of a comparison between a threshold value and a comparison value to be determined in the receiver device, **characterized in that** at least one of the comparison values to be determined in the receiver device depends on the possibly estimated energy of a voice signal of a voice frame and/or its change in comparison with the corresponding possibly estimated energy of a voice signal of a preceding voice frame.

**2.** Method according to Claim 1, **characterized in that** at least one of the comparison values to be determined in the receiver device is calculated by means of a mathematical function whose arguments are composed, inter alia, of other values to be determined in the receiver device.

**3.** Method according to one of the preceding claims, **characterized in that** at least one of the comparison values to be determined depends, inter alia, on specific parameters determined by means of a parametric source coding method carried out within the data transmission, and/or their change in comparison with the corresponding parameters of a preceding frame.

**4.** Method according to one of the preceding claims, **characterized in that** at least one of the comparison values to be determined is based, inter alia, on the Cyclic Redundancy Check (CRC).

**5.** Method according to one of the preceding claims, **characterized in that** at least one of the comparison values to be determined is calculated, inter alia, by means of a linear combination of values which are based on the Cyclic Redundancy Check (CRC) and/or values which depend on the possibly estimated frame energy and/or their change in comparison with the corresponding possibly estimated frame energy of a preceding frame and/or values which depend on specific parameters determined by means of a parametric source coding method and/or their change in comparison with the corresponding parameters of a preceding frame.

**6.** Method according to one of the preceding claims, in which, within the data transmission, inter alia Linear Predictive Coding (LPC) is carried out during the source coding, **characterized in that** at least one of the comparison values to be determined depends, inter alia, on the change of at least one linear predictive code filter coefficient in comparison with the corresponding coefficient in a preceding frame.

**7.** Method according to one of the preceding claims, in which, within the data transmission, inter alia a Long-Term Prediction (LTP) is carried out during the source coding, **characterized in that** at least one of the comparison values to be determined depends, inter alia, on the value of the long-term prediction delay.

**8.** Method according to one of the preceding claims, in which, within the data transmission, inter alia a regular pulse excitation analysis is carried out during the source coding, **characterized in that** at least one of the comparison values to be determined depends, inter alia, on at least one block amplitude or one residual energy value of a frame component.

**9.** Method according to one of the preceding claims, **characterized in that** the values of the parameters to be stored for later calculations are corrected in a way which at least reduces error propagation.

**EP 0 976 216 B1**

10. Receiver device (MR) for carrying out the method according to Claim 1, having

   a) means (MD) for determining comparison values which are specific to the current frame;
   b) means (MC) for comparing the comparison values which are determined and corresponding threshold values;
   c) means (ML) for logically linking the comparison operations carried out under b);
   d) means (MI) for characterizing a frame which is classified as unsatisfactory; and
   e) means (ME) for calculating or estimating the energy of a voice signal of a voice frame.

11. Device according to Claim 10, having means (MCRC) for Cyclic Redundancy Check (CRC) evaluation.

12. Device according to one of Claims 10 to 11, having means (MP) for determining parameters which are specific to the data transmitted within a frame.

13. Device according to one of Claims 10 to 12, having means (MS) for storing parameters which are required for later calculations and which are corrected before storage in such a way that error propagation is at least reduced.


**Revendications**

1. Procédé de détection d'erreurs de trame dans lequel une trame vocale est déclarée comme étant mauvaise si une certaine combinaison logique de critères est remplie, au moins un critère étant constitué d'une comparaison entre une valeur seuil et une valeur de comparaison à déterminer dans le dispositif de réception, **caractérisé en ce qu'**au moins l'une des valeurs de comparaison à déterminer dans le dispositif de réception dépend de l'énergie éventuellement évaluée d'un signal vocal d'une trame vocale et/ou de sa modification par rapport à l'énergie correspondante éventuellement évaluée d'un signal vocal d'une trame vocale précédente.

2. Procédé selon la revendication 1, **caractérisé en ce qu'**au moins l'une des valeurs de comparaison à déterminer dans le dispositif de réception est calculée par une fonction mathématique dont les arguments sont constitués entre autres à partir d'autres valeurs à déterminer dans le dispositif de réception.

3. Procédé selon l'une quelconque des revendications précédentes, **caractérisé en ce qu'**au moins l'une des valeurs de comparaison à déterminer dépend entre autres de certains paramètres déterminés par un procédé de codage de source paramétrique exécuté à l'intérieur de la transmission de données, et/ou de leur modification par rapport aux paramètres correspondants d'une trame précédente.

4. Procédé selon l'une quelconque des revendications précédentes, **caractérisé en ce qu'**au moins l'une des valeurs de comparaison à déterminer est basée entre autres sur le Cyclic Redundancy Check (CRC).

5. Procédé selon l'une quelconque des revendications précédentes, **caractérisé en ce qu'**au moins l'une des valeurs de comparaison à déterminer est déterminée par une combinaison linéaire de valeurs basées sur le Cyclic Redundancy Check (CRC) et/ou une combinaison de valeurs qui dépendent de l'énergie de trame éventuellement évaluée et/ou de leur modification par rapport à l'énergie de trame correspondante éventuellement évaluée d'une trame précédente et/ou de valeurs qui dépendent de certains paramètres déterminés par un procédé de codage de source paramétrique et/ou de leur modification par rapport aux paramètres correspondants d'une trame précédente.

6. Procédé selon l'une quelconque des revendications précédentes dans lequel un Linear Predictive Coding (LPC) est entre autres exécuté à l'intérieur de la transmission de données lors du codage de source, **caractérisé en ce qu'**au moins l'une des valeurs de comparaison à déterminer dépend entre autres de la modification d'au moins un coefficient de filtra Linear Predictive Coding par rapport au coefficient correspondant dans une trame précédente.

7. Procédé selon l'une quelconque des revendications précédentes, dans lequel un Long Term Prediction (LTP) est entre autres exécuté à l'intérieur de la transmission de données lors du codage de source, **caractérisé en ce qu'**au moins l'une des valeurs de comparaison à déterminer dépend entre autres de la valeur des Long Term Prediction-delays.

**8.** Procédé selon l'une quelconque des revendications précédentes, dans lequel une Regular Pulse Excitation Analyse est entre autres exécutée à l'intérieur de la transmission de données lors du codage de source, **caractérisé en ce qu'**au moins l'une des valeurs de comparaison à déterminer dépend entre autres d'au moins une amplitude de bloc ou d'une valeur d'énergie résiduelle d'une trame partielle.

**9.** Procédé selon l'une quelconque des revendications précédentes, **caractérisé en ce que** les valeurs des paramètres à mémoriser pour des calculs ultérieurs sont corrigées de manière à au moins réduire une propagation de l'erreur.

**10.** Dispositif de réception (MR) pour l'exécution du procédé selon la revendication 1, avec

a) des moyens (MD) pour déterminer des valeurs de comparaison spécifiques à la trame actuelle ;
b) des moyens (MC) pour comparer les valeurs de comparaison déterminées à des valeurs seuil correspondantes ;
c) des moyens (ML) pour l'enchaînement logique des opérations de comparaison exécutées en b) ;
d) des moyens (MI) pour caractériser une trame déclarée comme étant mauvaise ; et
e) des moyens (ME) pour calculer ou évaluer l'énergie d'un signal vocal d'une trame vocale.

**11.** Dispositif selon la revendication 10 avec des moyens (MCRC) pour l'évaluation du Cyclic Redundancy Check (CRC).

**12.** Dispositif selon l'une quelconque des revendications 10 à 11 avec des moyens (MP) pour la détermination de paramètres spécifiques aux données transmises à l'intérieur d'une trame.

**13.** Dispositif selon l'une quelconque des revendications 10 à 12 avec des moyens (MS) pour la mémorisation de paramètres nécessités pour des calculs ultérieurs et qui sont corrigés de telle sorte avant la mémorisation qu'une propagation de l'erreur est au moins réduite.

Fig.1

MR

MD

| | |
|---|---|
| MCRC | |
| ME | |
| MP | |
| MS | |

| MC | ML |
|---|---|

| MI |
|---|

Fig.2